(19) **Europäisches Patentamt / European Patent Office / Office européen des brevets**

(11) **EP 4 128 164 B1**

(12) **FASCICULE DE BREVET EUROPEEN**

| | |
|---|---|
| (45) Date de publication et mention de la délivrance du brevet:<br>**29.01.2025 Bulletin 2025/05** | (51) Classification Internationale des Brevets (IPC):<br>***G06T 11/00*** *(2006.01)* |
| (21) Numéro de dépôt: **21721146.5** | (52) Classification Coopérative des Brevets (CPC):<br>**G06T 11/006;** G06T 2211/424 |
| (22) Date de dépôt: **22.03.2021** | (86) Numéro de dépôt international:<br>**PCT/FR2021/050475** |
| | (87) Numéro de publication internationale:<br>**WO 2021/191542 (30.09.2021 Gazette 2021/39)** |

(54) **PROCÉDÉ DE RECONSTRUCTION PAR TOMOGRAPHIE RAYON X ET DISPOSITIF ASSOCIÉ**

RÖNTGENTOMOGRAPHIEREKONSTRUKTIONSVERFAHREN UND ZUGEHÖRIGE VORRICHTUNG

X-RAY TOMOGRAPHIC RECONSTRUCTION METHOD AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2020 FR 2002980**

(43) Date de publication de la demande:
**08.02.2023 Bulletin 2023/06**

(73) Titulaire: **SAFRAN**
**75015 Paris (FR)**

(72) Inventeurs:
- **CHAPDELAINE, Camille Jocelyn Roger**
  **77550 MOISSY-CRAMAYEL (FR)**
- **PICARD, Sylvaine**
  **77550 MOISSY-CRAMAYEL (FR)**

(74) Mandataire: **Cabinet Camus Lebkiri**
**25 rue de Maubeuge**
**75009 Paris (FR)**

(56) Documents cités:
| | |
|---|---|
| EP-A1- 2 466 547 | WO-A2-00/25268 |
| WO-A2-2011/100628 | US-A1- 2013 101 190 |
| US-A1- 2014 270 454 | |

**Description**

**DOMAINE TECHNIQUE DE L'INVENTION**

Le domaine technique de l'invention est celui du contrôle non destructif par rayon X.

La présente invention concerne un procédé de reconstruction par tomographie à rayons X et en particulier un procédé mettant en œuvre une méthode de reconstruction itérative permettant d'obtenir une pluralité de reconstructions et, éventuellement, d'obtenir une reconstruction moyenne ainsi que l'incertitude associée à chaque pixel/voxel de cette dernière. La présente invention concerne également le dispositif associé à ce procédé.

**ARRIERE-PLAN TECHNOLOGIQUE DE L'INVENTION**

Le contrôle par imagerie à rayons X nécessite de reconstruire virtuellement l'objet contrôlé à partir des projections obtenues par le passage de rayons X à travers l'objet à contrôler puis leur détection en sortie à l'aide d'un détecteur de rayons X. Cette reconstruction est généralement obtenue par des méthodes de rétroprojection filtrée. Néanmoins, ces méthodes souffrent d'artefacts de reconstruction dus à des phénomènes non linéaires (tels que la diffusion ou le durcissement de faisceau), aux incertitudes de comptage de photons, ou encore au bruit électronique du détecteur.

Afin de compenser ces artefacts, les méthodes de reconstruction itératives sont utilisées. Celles-ci fonctionnent en incorporant un modèle a priori (aussi appelé pénalité ou régularisation) sur l'objet à reconstruire. Généralement, elles sont initialisées en utilisant une première reconstruction obtenue par une méthode directe telle qu'une rétroprojection filtrée. Plusieurs méthodes itératives se concentrent sur l'accélération de la reconstruction. D'autres méthodes itératives visent à reconstruire l'objet sous différentes énergies afin de prendre en compte le fait que l'atténuation des rayons X à l'intérieur de l'objet dépend de l'énergie de la source. Enfin, certaines méthodes itératives se concentrent sur la réduction de forts artefacts difficiles à supprimer avec des méthodes itératives standards en travaillant sur le modèle d'atténuation des rayons X à l'intérieur de l'objet.

Cependant, par essence, les méthodes de reconstruction ne donnent qu'une estimation de l'intérieur de l'objet à contrôler. A ce titre, il est donc intéressant de disposer d'une incertitude sur chaque pixel de la reconstruction. Néanmoins, compte tenu de la grande dimension du problème de reconstruction, la matrice de covariance exacte n'est pas accessible en pratique.

Afin de s'affranchir de cette limitation, une première approche consiste à estimer un niveau de confiance sur la présence ou l'absence de structures d'intérêt dans la reconstruction via un test d'hypothèses. Ces structures d'intérêt correspondent par exemple à des défauts particuliers dans le cadre du contrôle de pièce industrielle, ou encore à des lésions sur un organe d'un patient dans le cadre du diagnostic médical. En tous les cas, ces structures d'intérêt nécessitent d'être connues. Une deuxième approche dite non supervisée consiste à estimer, conjointement à la reconstruction, une carte d'incertitude. Cette approche a l'avantage de mettre en valeur les régions de la reconstruction pour lesquelles l'incertitude est la plus grande.

Cependant, les méthodes de reconstruction classiques, par rétroprojection filtrée ou itératives, ne permettent pas d'avoir une incertitude sur la reconstruction obtenue. Certes, l'estimation d'une carte d'incertitude sur tout l'objet virtuellement reconstruit, déjà évoquée dans le paragraphe précédent, est proposée dans le chapitre 6 du document Bayesian iterative reconstruction methods for 3D X-ray Computed Tomography ; Camille Chapdelaine ; Thèse de doctorat ; Paris Saclay, 2019 (via par exemple, l'estimation de l'écart-type pour chaque pixel). Néanmoins, la méthode proposée néglige les corrélations entre les pixels afin d'alléger le coût calculatoire. Ceci correspond à une forte approximation qui tend à supprimer les détails dans la reconstruction. Or, ces détails peuvent correspondre à des défauts d'importance capitale dans le cadre du contrôle d'une pièce industrielle. Dans le cadre médical, ces détails peuvent être importants pour diagnostiquer une potentielle affection ou maladie. Ainsi, les méthodes existantes ne permettent pas d'estimer correctement une carte d'incertitude sur la reconstruction.

US2014/270454 propose une méthode pour produire une carte de bruit statistique à l'aide d'un système d'imagerie à rayons X. Les données indiquant le nombre de photons détectés par le système d'imagerie à rayons X sont acquises et une image est reconstruite à partir de ces données. Les données bruitées sont formées en ajoutant du bruit statistique aux données acquises. À partir de ces données bruitées, une image bruitée est reconstruite. Une carte de bruit statistique est ensuite produite en soustrayant l'image reconstruite et l'image bruitée.

Il existe donc un besoin d'un procédé permettant d'obtenir une pluralité de reconstructions, cette pluralité de reconstructions pouvant ensuite être utilisées pour obtenir une reconstruction moyenne et une incertitude associée à chaque pixel/voxel de cette reconstruction.

## RESUME DE L'INVENTION

L'invention offre une solution aux problèmes évoqués précédemment, en proposant une méthode de reconstruction itérative s'assurant d'une bonne répartition des reconstructions.

Pour cela, un premier aspect de l'invention concerne un procédé de reconstruction tomographique par rayon X d'un objet comprenant, à partir d'une pluralité d'images (chaque image de la pluralité d'images correspondant à une projection de l'objet) une étape de reconstruction de l'objet par une méthode de reconstruction itérative de sorte à obtenir une pluralité de reconstructions $x_{(m)}$ de l'objet, la méthode de reconstruction itérative étant mise en œuvre à partir de l'expression suivante :

$$x_{(m)}^{(t+1)} = x_{(m)}^{(t)} + \mu_t \varphi\left(x_{(m)}^{(t)}, x_{(l)}^{(t)}\right) \tilde{\varphi}\left(x_{(l)}^{(t)}\right)$$

où $x_{(m)}^{(t+1)}$ est la reconstruction $x_{(m)}$ après sa mise à jour à un instant $t$, $x_{(m)}^{(t)}$ est la reconstruction $x_{(m)}$ avant cette mise à jour, $\mu_t \in \mathbb{R}$ est un pas, $\varphi\left(x_{(m)}^{(t)}, x_{(l)}^{(t)}\right)$ ,, est une fonction noyau mesurant l'écart entre la reconstructions m et la reconstruction $l$ à l'itération $t$, $x_{(l)}^{(t)}$ est une reconstruction choisie aléatoirement parmi la pluralité de reconstructions $x_{(m)}^{(t)}$ et $\tilde{\varphi}\left(x_{(l)}^{(t)}\right)$ est une fonction donnée par l'expression suivante :

$$\tilde{\varphi}\left(x_{(l)}^{(t)}\right) = H^T W \left(\left(\frac{1}{M} \sum_{m=1}^{M} \varphi\left(x_{(m)}^{(t)}, x_{(l)}^{(t)}\right)\right) y - H\left(\frac{1}{M} \sum_{m=1}^{M} \varphi\left(x_{(m)}^{(t)}, x_{(l)}^{(t)}\right) x_{(m)}^{(t)}\right)\right)$$

$$- \frac{1}{M} \sum_{m=1}^{M} \varphi\left(x_{(m)}^{(t)}, x_{(l)}^{(t)}\right) \nabla_{x_{(m)}^{(t)}} \Psi\left(x_{(m)}^{(t)}\right) + \frac{1}{M} \sum_{m=1}^{M} \nabla_{x_{(m)}^{(t)}} \varphi\left(x_{(m)}^{(t)}, x_{(l)}^{(t)}\right)$$

où $H^T$ est un opérateur de rétroprojection, W est une matrice diagonale dont les coefficient diagonaux $w_i$ avec $i \in \{1, .., D\}$ sont des poids assignés à chaque projection, M est un nombre prédéfini de reconstructions $x_{(m)}$, $\nabla_{x_{(m)}^{(t)}}$ est le gradient en fonction de $x_{(m)}^{(t)}$, $y$ est le vecteur représentant la pluralité de projections de l'objet et $\Psi(x)$ est une fonction de pénalité différentiable choisie selon un modèle a priori sur la reconstruction $x$.

Les reconstructions $x_{(m)}$ obtenues à l'aide de la méthode de reconstruction itérative utilisée dans le procédé selon un premier aspect de l'invention sont « poussées » à l'aide de la fonction $\varphi\left(x_{(m)}^{(t)}, x_{(l)}^{(t)}\right)$ vers les modes de leur distribution $p(x|y)$ connaissant la pluralité de projections (représentée par le vecteur $y$). Les termes $\nabla_{x_{(m)}^{(t)}} \varphi\left(x_{(m)}^{(t)}, x_{(l)}^{(t)}\right)$ font se repousser les reconstructions entre elles, assurant ainsi la bonne répartition des reconstructions dans l'espace de leur distribution $p(x|y)$ connaissant la pluralité de projections y. Grâce à cette répulsion, l'obtention de reconstructions $x_{(m)}$ réalistes (car se dirigeant vers les modes de leur distribution connaissant les projections) et diverses (car se repoussant entre elles à chaque itération de l'algorithme itératif) est assurée.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Avantageusement, le procédé comprend, avant l'étape de reconstruction, une étape d'acquisition d'une pluralité d'images, chaque image de la pluralité d'images correspondant à une projection de l'objet, ladite acquisition étant effectuée à l'aide d'un dispositif d'imagerie par rayon X.

Avantageusement, le procédé comprend, après l'étape de reconstruction, une étape de détermination, à partir de la pluralité de reconstructions $x_{(m)}$, d'une reconstruction moyenne $\overline{x}$ et d'un indicateur de disparité $\sigma_i$ associé à chaque coefficient de la reconstruction moyenne $\overline{x}$.

Avantageusement, l'indicateur de disparité associé à chaque coefficient de la reconstruction moyenne $\overline{x}$ est égal à l'écart type entre les différentes valeurs du coefficient des reconstructions $x_m$ de la pluralité de reconstructions ayant servi au calcul du coefficient de la reconstruction moyenne considéré $\overline{x}$.

Un deuxième aspect de l'invention concerne un dispositif comprenant des moyens configurés pour mettre en œuvre un procédé selon un premier aspect de l'invention.

Avantageusement, le dispositif selon un deuxième aspect de l'invention comprend un module d'acquisition configuré pour acquérir une pluralité de projections d'un objet.

Un troisième aspect de l'invention concerne un programme d'ordinateur comprenant des instructions qui, lorsque le programme est exécuté par un ordinateur, conduisent celui-ci à mettre en œuvre le procédé selon un premier aspect de l'invention.

Un quatrième aspect de l'invention concerne un support de données lisible par ordinateur, sur lequel est enregistré le programme d'ordinateur selon un troisième aspect de l'invention.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

La [Fig. 1] montre un ordinogramme d'un procédé selon un premier aspect de l'invention.

La [Fig. 2] montre une représentation schématique d'un dispositif selon un deuxième aspect de l'invention configuré pour mettre en œuvre un procédé selon un premier aspect de l'invention.

La [Fig. 3] montre une représentation schématique d'un module d'acquisition utilisé dans un procédé selon un premier aspect de l'invention ou un dispositif selon un deuxième aspect de l'invention.

**DESCRIPTION DETAILLEE**

Les figures sont présentées à titre indicatif et nullement limitatif de l'invention. Sauf précision contraire, un même élément apparaissant sur des figures différentes présente une référence unique.

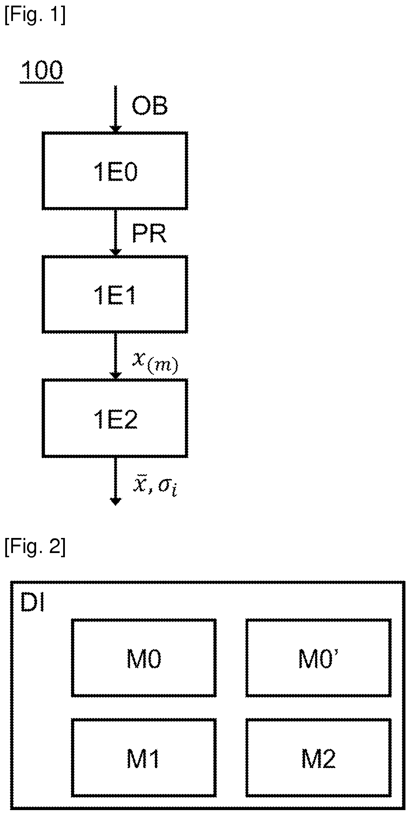

Un premier aspect de l'invention illustré aux figures 1 à 3 concerne un procédé 100 de reconstruction tomographique par rayon X d'un objet OB à partir d'une pluralité de projections PR de l'objet.

Dans un mode de réalisation, cette pluralité de projections PR est obtenue lors d'une étape de réception d'une pluralité de projections PR. Cette pluralité de projections PR pourra par exemple provenir d'un dispositif d'imagerie distant. Cette étape de réception pourra être mise en œuvre par un module M0' de communication comprenant un moyen de communication, par exemple un moyen de communication Wi-Fi, Bluetooth® ou bien encore Ethernet.

Dans un mode de réalisation alternatif, cette pluralité de projections PR est obtenue lors d'une étape 1E0 d'acquisition d'une pluralité d'images à l'aide d'un dispositif d'imagerie par rayon X, chaque image de cette pluralité d'images correspondant à une projection PR. Cette étape d'acquisition peut être mise en œuvre par un module M0 d'acquisition qui va soumettre l'objet OB à contrôler à un faisceau de rayons X de sorte à acquérir une pluralité de projections PR de l'objet OB selon plusieurs angles de vue.

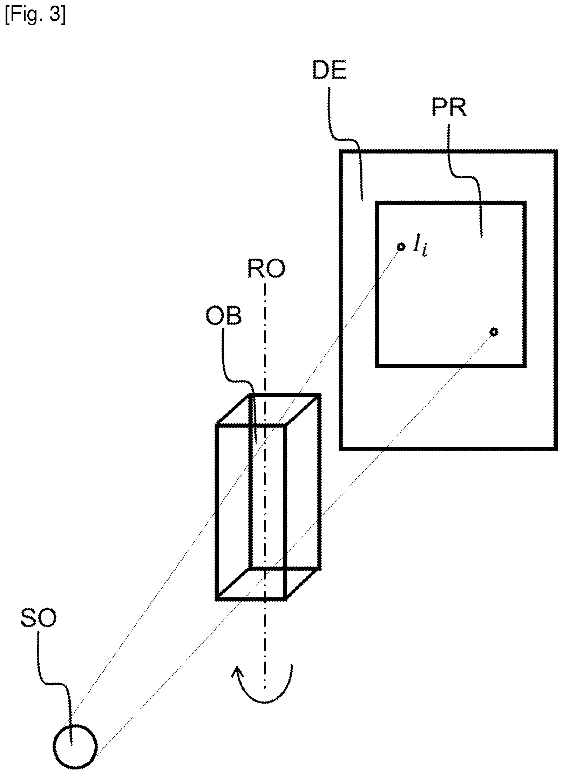

Ce module M0 d'acquisition est représenté schématiquement sur la figure 3 pour le cas d'une acquisition en 3D (trois dimensions) et dans le cas d'un faisceau conique. Plus particulièrement, l'objet OB est placé entre une ou plusieurs sources SO de rayons X (ici, une seule source a été représentée) et un détecteur DE, la ou les sources SO envoyant des rayons X à travers l'objet OB. Sur la figure 3, les rayons X sont envoyés selon un faisceau conique, mais ils peuvent également être envoyés selon un faisceau ayant une géométrie différente de celle-ci, par exemple un faisceau parallèle. Bien que représenté dans la figure 3 pour le cas 3D, le dispositif d'acquisition est aisément transposable dans le cas 2D (deux dimensions - voir par exemple Bayesian iterative reconstruction methods for 3D X-ray Computed Tomography ; Camille Chapdelaine ; Thèse de doctorat ; Paris Saclay, 2019 ; figure 2.3 ou bien encore A. C. Kak and Malcolm Slaney, Principles of Computerized Tomographic Imaging, IEEE Press, 1988).

Pour mémoire, l'intensité des rayons X décroît en fonction de la densité $f(r)$ rencontrée à l'intérieur de l'objet OB. Après avoir quitté l'objet, les rayons X se projettent sur le détecteur DE qui mesure leurs intensités $I_i$. Les rayons X projetés sur le détecteur forment une image appelée projection PR de l'objet OB. Ainsi, une projection PR est formée de pixels représentatifs de l'intensité du rayonnement mesuré par le détecteur DE. Plusieurs projections PR sont ainsi acquises en tournant l'objet OB autour d'un axe de rotation RO.

Dans la suite, le vecteur y représentera la pluralité de projections PR d'un objet OB. Ainsi, la dimension de vecteur y notée D sera égale au nombre de projections PR obtenues multiplié par le nombre de cellules (c'est-à-dire de pixels) du détecteur DE.

Le procédé 100 selon un premier aspect de l'invention comprend ensuite, à partir de la pluralité de projections PR, une étape 1E1 de reconstruction $x_{(m)}$ de l'objet OB par une méthode de reconstruction itérative de sorte à obtenir une pluralité de reconstructions $x_{(m)}$ de l'objet OB. Chaque reconstruction $x_{(m)}$ peut être représentée sous la forme d'une image composée de pixels (pour l'acquisition en deux dimensions) ou de voxels (pour l'acquisition en trois dimensions).

Dans la suite, une reconstruction sera notée $x_{(m)}$ avec $x_{(m)} \in \mathbb{R}^N$ et $m \in \{1, ..., M\}$ où $N$ le nombre de pixels (pour le cas en deux dimensions) ou de voxel (pour le cas en trois dimensions) dans lequel le domaine de l'objet (ou field of view en anglais) est discrétisé et M un nombre prédéterminé de reconstructions choisi par l'utilisateur. Par exemple, l'utilisateur peut choisir d'effectuer M = 10 reconstructions. En particulier, l'utilisateur peut choisir des valeurs de M plus grande afin de mieux explorer l'espace de la distribution des reconstructions connaissant les projections PR. Une limite pour le choix de la valeur de M peut être la capacité mémoire du système d'imagerie, ou encore le temps nécessaire pour effectuer le nombre voulu de reconstructions. L'étape 1E1 peut être mise en œuvre par un module M1 de reconstruction itérative, ledit module M1 comprenant par exemple un moyen de calcul (comme un processeur ou une carte ASIC) associé à une mémoire.

Pour des raisons qui seront détaillées dans la suite, la méthode de reconstruction itérative utilisée dans la présente invention permet aux reconstructions $x_{(m)}$ obtenues de bien couvrir le domaine de leur distribution connaissant les projections PR de la pluralité de projections PR. Cette distribution est notée $p(x|y)$ et peut s'exprimer à l'aide de la formule suivant :

[Math. 1]

$$p(x|y) = \frac{\exp\left(-\frac{1}{2}\|y - Hx\|_W^2 - \Psi(x)\right)}{Z_y}$$

où x est la reconstruction considérée, $Z_y$ est un facteur de normalisation ne dépendant que du vecteur y représentant la pluralité de projections PR mais pas de x, la fonction $\Psi \colon \mathbb{R}^N \longrightarrow \mathbb{R}$ est une fonction de pénalité différentiable choisie selon un modèle a priori sur la reconstruction x et la matrice H représente l'opérateur linéaire de projection défini par le modèle de l'atténuation des rayons X à travers l'objet OB (le produit matriciel Hx représentant les projections théoriques dépourvues de tout bruit de mesure, de diffusion et de durcissement de faisceau - pour plus de détail, le lecteur pourra se reporter au chapitre 3 du document Bayesian iterative reconstruction methods for 3D X-ray Computed Tomography ; Camille Chapdelaine ; Thèse de doctorat ; Paris Saclay, 2019.

La fonction $\Psi(x)$ est généralement définie sous la forme suivante :

[Math. 2]

$$\Psi(x) = \frac{1}{2}\|Dx\|_2^2 \ (1)$$

où D est une transformée linéaire (par exemple, transformée en ondelettes de Haar). Cette formulation est notamment choisie lorsque les coefficients de la transformée Dx sont parcimonieux. Bien entendu, la fonction $\Psi(x)$ telle que définie dans l'équation précédente ne constitue qu'un exemple et la présente invention peut être mise en œuvre à l'aide de toute fonction $\Psi(x)$ dès lors que $\Psi(x)$ est différentiable selon x.

Par ailleurs, la matrice W est une matrice diagonale dont les coefficients diagonaux $w_i$, $i \in \{1, ..., D\}$, sont des poids assignés à chaque projection PR de sorte que, pour tout vecteur $v \in \mathbb{R}^D$, on note :

[Math. 3]

$$\|v\|_W^2 = \sum_{i=1}^{D} w_i v_i{}^2.$$

Les méthodes de reconstruction itératives classiques présentées en introduction estiment seulement une reconstruction $\hat{x}$ se trouvant sur un mode de la loi $p(x|y)$, par exemple en résolvant le problème d'optimisation suivant :

[Math. 4]

$$\hat{x} = \arg\left(\max_x\left(\ln\left(p(x|y)\right)\right)\right)$$

où $\hat{x}$ est la reconstruction finale. Autrement dit, il s'agit de déterminer la reconstruction $x$ qui correspond à l'objet OB ayant le plus probablement donné la pluralité de projections PR représenté ici par le vecteur $y$. Ceci se fait par exemple via une méthode itérative de gradient à l'aide de la formule suivante :

[Math. 5]

$$x_{(m)}^{(t+1)} = x_{(m)}^{(t)} + \mu_t \nabla_{x_{(m)}^{(t)}} \ln\left(p(x_{(m)}^{(t)}|y)\right) = x_{(m)}^{(t)} + \mu_t \left(H^T W \left(y - H x_{(m)}^{(t)}\right) - \nabla_{x_{(m)}^{(t)}} \Psi \left(x_{(m)}^{(t)}\right)\right)$$

où $x_{(m)}^{(t+1)}$ est la reconstruction $x_{(m)}$ après sa mise à jour à un instant $t$, $x_{(m)}^{(t)}$ est la reconstruction $x_{(m)}$ avant cette mise à jour $\mu_t \in \mathbb{R}$ est un pas, $\nabla_{x_{(m)}^{(t)}}$ le gradient en fonction de $x_{(m)}^{(t)}$, ln ($x$) est la fonction logarithme, $p(x|y)$ est la distribution des reconstructions (introduite précédemment), $y$ est le vecteur représentant la pluralité de projections PR, $H^T$ est l'opérateur de rétroprojection, $W$ est une matrice diagonale dont les coefficients diagonaux $w_i$, $i \in \{1, ..., D\}$, sont des poids assignés à chaque projection PR (introduite précédemment) et $\Psi$ est une fonction de pénalité différentiable (introduite précédemment). Cependant, une telle solution présente les inconvénients déjà détaillés en introduction.

Aussi, afin de s'affranchir de ces derniers, les inventeurs ont mis au point une méthode de reconstruction itérative alternative. Dans cette méthode, la reconstruction est mise à jour à l'aide de l'expression suivante :

[Math. 6]

$$x_{(m)}^{(t+1)} = x_{(m)}^{(t)} + \mu_t \varphi\left(x_{(m)}^{(t)}, x_{(l)}^{(t)}\right) \tilde{\varphi}\left(x_{(l)}^{(t)}\right)$$

où $x_{(m)}^{(t+1)}$ est la reconstruction $x_{(m)}$ après sa mise à jour à un instant $t$, $x_{(m)}^{(t)}$ est la reconstruction $x_{(m)}$ avant cette mise à jour, $\mu_t \in \mathbb{R}$ est un pas de temps, $\varphi\left(x_{(m)}^{(t)}, x_{(l)}^{(t)}\right)$ ,, est la mesure de l'écart entre les reconstructions $m$ et $l$ à l'itération $t$, $x_{(l)}^{(t)}$ est une reconstruction choisie aléatoirement et $\tilde{\varphi}\left(x_{(l)}^{(t)}\right)$ est une fonction que l'on définira dans la suite. La valeur de la projection $x_{(m)}$ est obtenue en itérant entre $t = 0$ et $t = t_{max}$ par pas de temps égal où $t_{max}$ est fixé par l'utilisateur. On entend par « $x_{(l)}^{(t)}$ est une reconstruction choisie aléatoirement » que, à chaque itération de la méthode de mise à jour itérative selon l'invention, une reconstruction $x_{(l)}^{(t)}$ (avec $l \in \{1, ..., M\}$) est sélectionnée au hasard parmi la pluralité de reconstructions $x_{(m)}^{(t)}$, les reconstructions $x_{(m)}$ étant ensuite mises à jour en utilisant la reconstruction ainsi sélectionnée. La fonction $\varphi$ est telle que $\varphi(x, x) \geq 0$ et $\varphi(x, x') = \varphi(x', x)$ pour tout $x, x' \in \mathbb{R}^N$. Des exemples de telles fonctions $\varphi$, appelées fonctions-noyaux (ou kernel en anglais), peuvent être trouvées dans le document Charles A ; Micchelli, Yuesheng Xu, et Haizhang Zhang ; Universal kernels ; Journal of Machine Learning Research, 2006, vol. 7, p. 2651-2667.

La fonction $\tilde{\varphi}\left(x_{(l)}^{(t)}\right)$ utilisée dans l'expression précédente est donnée par l'expression suivante :

[Math. 7]

$$\tilde{\varphi}\left(x_{(l)}^{(t)}\right) = H^T W \left( \left( \frac{1}{M} \sum_{m=1}^{M} \varphi\left(x_{(m)}^{(t)}, x_{(l)}^{(t)}\right) \right) y - H\left( \frac{1}{M} \sum_{m=1}^{M} \varphi\left(x_{(m)}^{(t)}, x_{(l)}^{(t)}\right) x_{(m)}^{(t)} \right) \right)$$

$$- \frac{1}{M} \sum_{m=1}^{M} \varphi\left(x_{(m)}^{(t)}, x_{(l)}^{(t)}\right) \nabla_{x_{(m)}^{(t)}} \Psi\left(x_{(m)}^{(t)}\right) + \frac{1}{M} \sum_{m=1}^{M} \nabla_{x_{(m)}^{(t)}} \varphi\left(x_{(m)}^{(t)}, x_{(l)}^{(t)}\right)$$

où $H^T$ est l'opérateur de rétroprojection (introduit précédemment), W est une matrice diagonale dont les coefficient diagonaux $w_i$, avec $i \in \{1,.., D\}$, sont des poids assignés à chaque projection PR (introduite précédemment), M est un nombre prédéfini de reconstructions (introduit précédemment), $\nabla_{x_{(m)}^{(t)}}$ est le gradient en fonction de $x_{(m)}^{(t)}$ (introduite précédemment), y est le vecteur représentant la pluralité de projections PR de l'objet OB (introduit précédemment) et $\Psi(x)$ est une fonction de pénalité différentiable choisie selon un modèle a priori sur la reconstruction x (introduit précédemment). Des exemples de telles fonctions différentiables peuvent être trouvés dans le chapitre 2, en section 2.5 (équation 2.38), du document Bayesian iterative reconstruction methods for 3D X-ray Computed Tomography ; Camille Chapdelaine ; Thèse de doctorat ; Paris Saclay, 2019.

A l'issue de cette étape 1E1 de reconstruction, on obtient M reconstructions $x_{(m)}$ qui peuvent ensuite être utilisées pour détecter un éventuel défaut dans l'objet OB. La production d'une pluralité de reconstructions $x_{(m)}$ permet une analyse plus fine des éventuels défauts détectés. Par exemple, un opérateur voyant un défaut sur l'une des reconstructions pourra examiner les autres reconstructions pour vérifier la présence de ce même défaut. En effet, le réalisme et la diversité des reconstructions obtenues à l'aide d'un procédé 100 selon un premier aspect de l'invention rendent cette comparaison pertinente. Ce réalisme et cette diversité sont dus au fait que, dans la méthode de reconstruction itérative selon l'invention les reconstructions $x_{(m)}$ obtenues sont « poussées » à l'aide de la fonction $\varphi\left(x_{(m)}^{(t)}, x_{(n)}^{(t)}\right)$ vers les modes de leur distribution p(x|y) connaissant la pluralité de projections PR (représentée par le vecteur y) tout en assurant leur bonne répartition dans l'espace.

Comme cela va être présenté maintenant, cette diversité permet d'évaluer l'incertitude associée à chaque pixel (pour le cas en deux dimensions) ou chaque voxel (pour le cas en trois dimensions) de l'objet OB reconstitué. Pour cela, dans un mode de réalisation, le procédé 100 selon un premier aspect de l'invention comprend une étape 1E2 de détermination, à partir de la pluralité de reconstructions $x_{(m)}$, d'une reconstruction moyenne notée $\overline{x}$ obtenue en faisant la moyenne des reconstructions $x_{(m)}$ de la pluralité de reconstruction ainsi que d'un indicateur de disparité, noté $\sigma_i$, associé à chaque coefficient de la reconstruction moyenne $\overline{x}$. On entend par « faire la moyenne des reconstructions $x_{(m)}$ » que :

[Math. 8]

$$\bar{x} = \frac{\sum_{m=1}^{M} x_{(m)}}{M}$$

Dans un mode de réalisation, l'indicateur de disparité associé à chaque coefficient de la reconstruction moyenne $\bar{x}$ est égal à l'écart type entre les différentes valeurs du coefficient des reconstructions $x_m$ de la pluralité de reconstructions ayant servies au calcul du coefficient de la reconstruction moyenne considéré $\bar{x}$. Autrement dit, en notant $\bar{x}(i)$ le $i^{ème}$ coefficient du vecteur $\bar{x}$ et $x(i)_{(m)}$ le $i^{ème}$ coefficient du vecteur $x_{(m)}$, alors l'indicateur de disparité associé à ce coefficient, noté $\sigma_i$ est donné par l'expression suivante :

$$\sigma_i = \sqrt{\frac{1}{M} \sum_{m=1}^{M} \left( x(i)_{(m)} - \bar{x}(i) \right)^2}$$

Bien entendu, d'autres indicateurs de disparité peuvent être utilisés pour mesurer cette incertitude comme la variance ou bien encore l'écart interquartile. De manière générale, toute grandeur statistique permettant de mesurer la dispersion dans les coefficients des reconstructions peut être utilisée comme indicateur de disparité. De même, l'indicateur de disparité peut être une mesure agrégée de la dispersion établie à partir de plusieurs grandeurs statistiques mesurant cette dispersion.

A l'issue de cette étape 1E2, l'on dispose d'une reconstruction moyenne $\bar{x}$ ainsi que de l'incertitude associée à chaque coefficient de cette reconstruction moyenne. Sachant qu'une telle reconstruction peut être visualiser sous la forme d'une image dont chaque pixel (pour le cas en deux dimensions) ou chaque voxel (pour le cas en trois dimensions) est associé à un et un seul coefficient du vecteur $\bar{x}$, il est possible de visualiser une image reconstruite de l'objet OB ainsi que l'incertitude associée à chaque pixel/voxel de ladite image.

Dans un mode de réalisation, l'indicateur de disparité peut prendre la forme d'une carte de confiance grâce à laquelle il est possible de visualiser les zones de la reconstruction bénéficiant d'un fort indice de confiance (c'est-à-dire associées à un indicateur de disparité faible) ou bien encore les zones bénéficiant d'un faible indice de confiance (c'est-à-dire associées à un indicateur de disparité élevé). Ainsi, par exemple, un opérateur peut analyser la présence de défaut, mais également l'incertitude associé à cette présence.

L'étape 1E2 de détermination d'une reconstruction moyenne $\bar{x}$ et d'un indicateur de disparité peut être mise en œuvre par un module M2 de détermination d'une reconstruction moyenne et d'un indicateur de disparité, ledit module M2 comprenant par exemple un moyen de calcul (comme un processeur ou une carte ASIC) associé à une mémoire. Dans un mode de réalisation, le module M1 de reconstruction itérative et le module M2 de détermination d'une reconstruction moyenne et d'un indicateur de disparité sont confondus.

Un deuxième aspect de l'invention concerne un dispositif DI comprenant les moyens configurés pour mettre en œuvre un procédé 100 selon un premier aspect de l'invention. Dans un mode de réalisation, ce dispositif est un tomographe par rayons X. Le dispositif DI selon un deuxième aspect de l'invention comprend un moyen de calcul (par exemple un processeur ou bien encore une carte ASIC) associé à une mémoire. La mémoire est en outre configurée pour stocker les instructions nécessaires à la mise en œuvre d'un procédé selon un premier aspect de l'invention ainsi que les données nécessaires à cette mise en œuvre. Ces éléments peuvent notamment être intégrés au sein d'un module M1 de reconstruction itérative et/ou d'un module M2 de détermination d'une reconstruction moyenne et d'un indicateur de disparité. Dans un mode de réalisation, le dispositif DI comprend un module M0' de communication comprenant un moyen de communication, par exemple un moyen de communication Wi-Fi, Bluetooth® ou bien encore Ethernet. Dans un mode de réalisation, le dispositif DI comprend un module M0 d'acquisition, par exemple un module d'acquisition tel qu'illustré à la figure 3. Dans un mode de réalisation, le dispositif DI comprend également un moyen d'affichage (par exemple un écran ou un écran tactile) et un moyen de saisie (par exemple un clavier, une souris ou un écran tactile) de sorte à permettre une interaction entre l'opérateur et le dispositif DI selon un deuxième aspect de l'invention.

**Revendications**

1. Procédé (100) de reconstruction tomographique par rayon X d'un objet (OB) comprenant, à partir d'une pluralité d'images, chaque image de la pluralité d'images correspondant à une projection (PR) de l'objet (OB), une étape (1E1) de reconstruction de l'objet (OB) par une méthode de reconstruction itérative de sorte à obtenir une pluralité de reconstructions $x_{(m)}$ de l'objet (OB), le procédé (100) étant **caractérisé en ce que** la méthode de reconstruction itérative est mise en œuvre à partir de l'expression suivante :

$$x_{(m)}^{(t+1)} = x_{(m)}^{(t)} + \mu_t \varphi\left(x_{(m)}^{(t)}, x_{(l)}^{(t)}\right) \tilde{\varphi}\left(x_{(l)}^{(t)}\right)$$

où $x_{(m)}^{(t+1)}$ est la reconstruction $x_{(m)}$ après sa mise à jour à un instant t, $x_{(m)}^{(t)}$ est la reconstruction $x_{(m)}$ avant cette mise à jour, $\mu_t \in \mathbb{R}$ est un pas, $\varphi\left(x_{(m)}^{(t)}, x_{(l)}^{(t)}\right)$, est une fonction noyau mesurant l'écart entre la reconstruction m et la reconstruction I à l'itération $t$, $x_{(l)}^{(t)}$ est une reconstruction choisie aléatoirement parmi la pluralité de reconstructions $x_{(m)}^{(t)}$ et $\tilde{\varphi}\left(x_{(l)}^{(t)}\right)$ est une fonction donnée par l'expression suivante :

$$\tilde{\varphi}\left(x_{(l)}^{(t)}\right) = H^T W \left(\left(\frac{1}{M}\sum_{m=1}^{M}\varphi\left(x_{(m)}^{(t)}, x_{(l)}^{(t)}\right)\right) y - H\left(\frac{1}{M}\sum_{m=1}^{M}\varphi\left(x_{(m)}^{(t)}, x_{(l)}^{(t)}\right) x_{(m)}^{(t)}\right)\right)$$

$$- \frac{1}{M}\sum_{m=1}^{M}\varphi\left(x_{(m)}^{(t)}, x_{(l)}^{(t)}\right)\nabla_{x_{(m)}^{(t)}}\Psi\left(x_{(m)}^{(t)}\right) + \frac{1}{M}\sum_{m=1}^{M}\nabla_{x_{(m)}^{(t)}}\varphi\left(x_{(m)}^{(t)}, x_{(l)}^{(t)}\right)$$

où $H^T$ est un opérateur de rétroprojection, W est une matrice diagonale dont les coefficient diagonaux $w_i$ avec $i \in \{1, .., D\}$ sont des poids assignés à chaque projection, M est un nombre prédéfini de reconstructions $x_{(m)}$, $\nabla_{x_{(m)}^{(t)}}$ est le gradient en fonction de $x_{(m)}^{(t)}$, $y$ est le vecteur représentant la pluralité de projections (PR) de l'objet (OB) et $\Psi(x)$ est une fonction de pénalité différentiable choisie selon un modèle a priori sur la reconstruction $x$.

2. Procédé (100) selon la revendication précédente **caractérisé en ce qu'**il comprend, avant l'étape (1E1) de reconstruction, une étape (1E0) d'acquisition d'une pluralité d'images, chaque image de la pluralité d'images correspondant à une projection (PR) de l'objet (OB), ladite acquisition étant effectuée à l'aide d'un dispositif d'imagerie par rayon X.

3. Procédé (100) selon l'une des deux revendications précédentes **caractérisé en ce qu'**il comprend, après l'étape (1E1) de reconstruction, une étape (1E2) de détermination, à partir de la pluralité de reconstructions $x_{(m)}$, d'une reconstruction moyenne $\overline{x}$ et d'un indicateur de disparité $\sigma_i$ associé à chaque coefficient de la reconstruction moyenne $\overline{x}$.

4. Procédé (100) selon la revendication précédente **caractérisé en ce que** l'indicateur $\sigma_i$ de disparité associé à chaque coefficient de la reconstruction moyenne $\overline{x}$ est égal à l'écart type entre les différentes valeurs du coefficient des reconstructions $x_m$ de la pluralité de reconstructions ayant servies au calcul du coefficient de la reconstruction moyenne considéré $\overline{x}$.

5. Tomographe (DI) comprenant un moyen de calcul et une mémoire configurés pour mettre en œuvre un procédé (100) selon l'une des revendications précédentes.

6. Programme d'ordinateur comprenant des instructions qui, lorsque le programme est exécuté par un ordinateur, conduisent celui-ci à mettre en œuvre le procédé (100) selon l'une des revendications 1 à 4.

7. Support de données lisible par ordinateur, sur lequel est enregistré le programme d'ordinateur selon la revendication précédente.

**Patentansprüche**

1. Verfahren (100) zur röntgentomographischen Rekonstruktion eines Objekts (OB), das ausgehend von einer Vielzahl von Bildern, wobei jedes Bild der Vielzahl von Bildern einer Projektion (PR) des Objekts (OB) entspricht, einen Schritt (1E1) der Rekonstruktion des Objekts (OB) durch ein iteratives Rekonstruktionsverfahren umfasst, sodass eine Vielzahl von Rekonstruktionen $x_{(m)}$ des Objekts (OB) erzielt wird, wobei das Verfahren (100) **dadurch gekennzeichnet ist, dass** das iterative Rekonstruktionsverfahren aus dem folgenden Ausdruck ermittelt wird:

$$x_{(m)}^{(t+1)} = x_{(m)}^{(t)} + \mu_t\, \varphi\left(x_{(m)}^{(t)}, x_{(l)}^{(t)}\right) \tilde{\varphi}\left(x_{(l)}^{(t)}\right)$$

wobei $x_{(m)}^{(t+1)}$ die Rekonstruktion $x_{(m)}$ nach ihrer Aktualisierung zu einem Zeitpunkt $t$ ist, $x_{(m)}^{(t)}$ die Rekonstruktion $x_{(m)}$ vor dieser Aktualisierung, $\mu_t \in \mathbb{R}$ eine Schrittweite ist, $\varphi\left(x_{(m)}^{(t)}, x_{(l)}^{(t)}\right)$ eine Kernfunktion ist, die die Abweichung zwischen der Rekonstruktion m und der Rekonstruktion I in der Iteration $t$ misst, $x_{(l)}^{(t)}$ eine zufällig ausgewählte Rekonstruktion aus der Vielzahl von Rekonstruktionen $x_{(m)}^{(t)}$ ist und $\tilde{\varphi}\left(x_{(l)}^{(t)}\right)$ eine Funktion ist, die durch den folgenden Ausdruck gegeben ist:

$$\tilde{\varphi}\left(x_{(l)}^{(t)}\right) = H^T W\left(\left(\frac{1}{M}\sum_{m=1}^{M}\varphi\left(x_{(m)}^{(t)}, x_{(l)}^{(t)}\right)\right) y - H\left(\frac{1}{M}\sum_{m=1}^{M}\varphi\left(x_{(m)}^{(t)}, x_{(l)}^{(t)}\right) x_{(m)}^{(t)}\right)\right)$$

$$-\frac{1}{M}\sum_{m=1}^{M}\varphi\left(x_{(m)}^{(t)}, x_{(l)}^{(t)}\right)\nabla_{x_{(m)}^{(t)}}\Psi\left(x_{(m)}^{(t)}\right) + \frac{1}{M}\sum_{m=1}^{M}\nabla_{x_{(m)}^{(t)}}\varphi\left(x_{(m)}^{(t)}, x_{(l)}^{(t)}\right)$$

wobei $H^T$ ein Rückprojektionsoperator ist, $W$ eine Diagonalmatrix ist, deren Diagonalkoeffizienten $w_i$ mit $i \in \{1,.., D\}$ Gewichte sind, die jeder Projektion zugeteilt sind, M eine vordefinierte Anzahl von Rekonstruktionen $x_{(m)}$ ist, $\nabla_{x_{(m)}^{(t)}}$ der Gradient als Funktion von $x_{(m)}^{(t)}$ ist, $y$ der Vektor ist, der die Vielzahl der Projektionen (PR) des Objekts (OB) repräsentiert und $\Psi(x)$ eine differenzierbare Straffunktion ist, die gemäß einem A-priori-Modell über die Rekonstruktion $x$ ausgewählt wird.

2. Verfahren (100) nach dem vorhergehenden Anspruch, **dadurch gekennzeichnet, dass** es vor dem Schritt (1E1) der Rekonstruktion einen Schritt (1E0) der Erfassung einer Vielzahl von Bildern umfasst, wobei jedes Bild der Vielzahl von Bildern einer Projektion (PR) des Objekts (OB) entspricht und wobei die Erfassung mithilfe einer Röntgenbildgebungsvorrichtung durchgeführt wird.

3. Verfahren (100) nach einem der beiden vorhergehenden Ansprüche, **dadurch gekennzeichnet, dass** es nach dem Schritt (1E1) der Rekonstruktion einen Schritt (1E2) des Bestimmens anhand der Vielzahl der Rekontruktionen $x_{(m)}$ einer durchschnittlichen Rekonstruktion $\overline{x}$ und eines Diparitätsindikators $\sigma_i$ umfasst, der mit jedem Koeffizienten der durchschnittlichen Rekonstruktion $\overline{x}$ verknüpft ist.

4. Verfahren (100) nach dem vorhergehenden Anspruch, **dadurch gekennzeichnet, dass** der Disparitätsindikator $\sigma_i$, der mit jedem Koeffizienten der durchschnittlichen Rekonstruktion $\overline{x}$ verknüpft ist, gleich der Standardabweichung zwischen den verschiedenen Werten des Koeffizienten der Rekonstruktionen $x_m$ der Vielzahl von Rekonstruktionen ist, die der Berechnung des relevanten Koeffizienten der durchschnittlichen Rekonstruktion $\overline{x}$ gedient haben.

5. Tomograph (DI) mit Rechenmitteln und einem Speicher, die so ausgelegt sind, dass sie ein Verfahren (100) nach einem der vorhergehenden Ansprüche ausführen.

6. Computerprogramm mit Anweisungen, die, wenn das Programm von einem Computer ausgeführt wird, diesen dazu veranlassen, ein Verfahren (100) nach einem der Ansprüche 1 bis 4 auszuführen.

7. Computerlesbarer Datenträger, auf dem das Computerprogramm nach dem vorhergehenden Anspruch gespeichert ist.

**Claims**

1. A method (100) for X-ray tomographic reconstruction for reconstructing an object (OB) comprising, from a plurality of images, each image of the plurality of images corresponding to a projection (PR) of the object (OB), a step (1E1) of reconstructing the object (OB) by an iterative reconstruction method so as to obtain a plurality of reconstructions $x_{(m)}$ of the object (OB), the method (100) being **characterised in that** the iterative reconstruction method is implemented from the following expression:

$$x_{(m)}^{(t+1)} = x_{(m)}^{(t)} + \mu_t \varphi\left(x_{(m)}^{(t)}, x_{(l)}^{(t)}\right) \tilde{\varphi}\left(x_{(l)}^{(t)}\right)$$

where $x_{(m)}^{(t+1)}$ is the reconstruction $x_{(m)}$ after its update at a time instant $t$, $x_{(m)}^{(t)}$ is the reconstruction $x_{(m)}$ before this update, $\mu_t \in \mathbb{R}$ is a step, $\varphi\left(x_{(m)}^{(t)}, x_{(l)}^{(t)}\right)$, is a kernel function measuring the deviation between reconstruction $m$ and reconstruction I at iteration $t$, $x_{(l)}^{(t)}$ is a reconstruction randomly chosen from the plurality of reconstructions $x_{(m)}^{(t)}$ and $\tilde{\varphi}\left(x_{(l)}^{(t)}\right)$ is a function given by the following expression:

$$\tilde{\varphi}\left(x_{(l)}^{(t)}\right) = H^T W \left( \left( \frac{1}{M} \sum_{m=1}^{M} \varphi\left(x_{(m)}^{(t)}, x_{(l)}^{(t)}\right) \right) y - H \left( \frac{1}{M} \sum_{m=1}^{M} \varphi\left(x_{(m)}^{(t)}, x_{(l)}^{(t)}\right) x_{(m)}^{(t)} \right) \right)$$

$$- \frac{1}{M} \sum_{m=1}^{M} \varphi\left(x_{(m)}^{(t)}, x_{(l)}^{(t)}\right) \nabla_{x_{(m)}^{(t)}} \Psi\left(x_{(m)}^{(t)}\right) + \frac{1}{M} \sum_{m=1}^{M} \nabla_{x_{(m)}^{(t)}} \varphi\left(x_{(m)}^{(t)}, x_{(l)}^{(t)}\right)$$

where $H^T$ is a back-projection operator, $W$ is a diagonal matrix whose diagonal coefficients $w_i$ with $i \in \{1,.., D\}$ are weights assigned to each projection, M is a predefined number of reconstructions $x_{(m)}$, $\nabla_{x_{(m)}^{(t)}}$ is the gradient as a function of $x_{(m)}^{(t)}$, $y$ is the vector representing the plurality of projections (PR) of the object (OB) and $\Psi(x)$ is a differentiable penalty function chosen according to an a priori model on the reconstruction $x$.

2. The method (100) according to the preceding claim, **characterised in that** it comprises, before the reconstruction step (1E1), a step (1E0) of acquiring a plurality of images, each image of the plurality of images corresponding to a projection (PR) of the object (OB), said acquisition being carried out using an X-ray imaging device.

3. The method (100) according to one of the preceding claims, **characterised in that** it comprises, after the reconstruction step (1E1), a step (1E2) of determining, from the plurality of reconstructions $x_{(m)}$, an average reconstruction $\bar{x}$ and a disparity indicator $\sigma_i$ associated with each coefficient of the average reconstruction $\bar{x}$.

4. The method (100) according to the preceding claim, **characterised in that** the disparity indicator $\sigma_i$ associated with

each coefficient of the average reconstruction $\overline{x}$ is equal to the standard deviation between the different values of the coefficient of the reconstructions $x_m$ of the plurality of reconstructions used for computing the considered coefficient of the average reconstruction $\overline{x}$.

5. A tomograph (DI) comprising means configured to implement a method (100) according to one of the preceding claims.

6. A computer program comprising instructions which, when the program is executed by a computer, cause the computer to implement the method (100) according to one of claims 1 to 4.

7. A computer-readable data medium, on which the computer program according to the preceding claim is recorded.

[Fig. 1]

<u>100</u>

↓ OB

```
┌─────────────┐
│     1E0     │
└─────────────┘
```

↓ PR

```
┌─────────────┐
│     1E1     │
└─────────────┘
```

↓ $x_{(m)}$

```
┌─────────────┐
│     1E2     │
└─────────────┘
```

↓ $\bar{x}, \sigma_i$

[Fig. 2]

```
┌───────────────────────────────────────┐
│ DI                                     │
│   ┌─────────────┐   ┌─────────────┐    │
│   │     M0      │   │     M0'     │    │
│   └─────────────┘   └─────────────┘    │
│   ┌─────────────┐   ┌─────────────┐    │
│   │     M1      │   │     M2      │    │
│   └─────────────┘   └─────────────┘    │
└───────────────────────────────────────┘
```

[Fig. 3]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014270454 A

**Littérature non-brevet citée dans la description**

- Bayesian iterative reconstruction methods for 3D X-ray Computed Tomography. **CAMILLE CHAPDELAINE**. Thèse de doctorat ; Paris Saclay. 2019
- **A. C. KAK** ; **MALCOLM SLANEY**. Principles of Computerized Tomographic Imaging. IEEE Press, 1988
- **CHARLES A** ; **MICCHELLI, YUESHENG XU** ; **HAIZHANG ZHANG**. Universal kernels. *Journal of Machine Learning Research*, 2006, vol. 7, 2651-2667